# EUROPÄISCHE PATENTSCHRIFT

(11) **EP 0 466 889 B1**
(45) Veröffentlichungstag und Bekanntmachung des Hinweises auf die Patenterteilung: **14.09.1994**
(21) Anmeldenummer: 91903645.9
(22) Anmeldetag: 05.02.1991
(51) Int. Cl.: G01M 11/02

(54) **VERFAHREN UND ANORDNUNG ZUR PRÜFUNG OPTISCHER KOMPONENTEN ODER SYSTEME**
PROCESS AND ARRANGEMENT FOR TESTING OPTICAL COMPONENTS OR SYSTEMS
PROCEDE ET DISPOSITIF DE CONTROLE DE COMPOSANTS OU DE SYSTEMES OPTIQUES

(30) Priorität: 07.02.1990 DE 4003699
(43) Veröffentlichungstag der Anmeldung: 22.01.1992
(73) Patentinhaber: Leica AG, CH-9435 Heerbrugg (CH)
(72) Erfinder: BRAUNECKER, Bernhard, CH-9445 Rebstein (CH); GÄCHTER, Bernhard, CH-9436 Balgach (CH); HUISER-SIMONIN, Christiane (Erbin HUISER, Andre), CH-9438 Lüchingen (CH)
(86) Internationale Anmeldenummer: EP9100219
(87) Internationale Veröffentlichungsnummer: WO9112510

(56) Entgegenhaltungen:
- EP-A- 0 249 799
- EP-A- 0 249 800
- GB-A- 1 490 215
- US-A- 4 609 818

## Beschreibung

Die Erfindung betrifft ein Verfahren und eine Anordnung zur Prüfung optischer Komponenten oder Systeme, welche in einer Anordnung aus einem fokussierenden optischen System und einem ortsauflösenden Lichtdetektor nahe dessen Brennebene enthalten sind.

Derartige Verfahren und Anordnungen sind bekannt, vgl. D. Malacara (Editor): "Optical Shop Testing", John Wiley + Sons, New York 1978, Chapter 10: "Hartmann and Other Screen Tests" von I. Ghozeil, Seiten 323-333. Sie stellen eine Abwandlung der Hartmann'schen Objektivprüfung dar und benutzen ein paralleles Lichtbündel, welches die ganze Apertur ausleuchtet. Davon wird mit einer Lochblende mit einem Loch oder, bei Multiplexverfahren, mehreren codierten Löchern ein oder mehrere eng begrenzte Bündel ausgeblendet und damit die ganze Apertur abgetastet.

Ein optischen Scanner mit einer mittels Schlitten im X- und Y-Richtung bewegboren und im dieser Ebene drehbaren Lichtquelle ist aus US-A- 4 609 818 bekannt. Im dieser Vorrichtung ist die Lichtquelle jedoch nicht mit einem ortsauflösenden Lichtdetektor nahe der Brennebene eines zu prüfenden optischen Systems gekoppelt.

Die Schwierigkeit liegt dabei in der Darstellung eines sehr präzisen parallelen Lichtbündels mit ebener Wellenfront über einen großen Querschnitt, was zumindest einen sehr hohen Aufwand an optischen Mitteln benötigt.

Es ist die Aufgabe der Erfindung, ein gattungsgemäßes Verfahren und eine Anordnung zu schaffen, welche ohne großformatige parallele Lichtbündel auskommen und eine kompakte, robuste und relativ preiswerte Ausführung auch für große Aperturen ermöglichen.

Die Lösung gelingt für ein gattungsgemäßes Verfahren dadurch, daß eine einen Kollimator enthaltende Quelle für ein eng begrenztes präzise paralleles Lichtbündel mit ebener Wellenfront in einer Ebene parallel zur Wellenfront zeilenförmig bewegt wird, zu mehreren Positionen der Quelle das Signal des Lichtdetektors bestimmt wird, Kippbewegungen der Quelle senkrecht zur Zeilenrichtung durch eine Anordnung mit einem zweiten Kollimator und ortsempfindlichem Detektor erfaßt werden und die Apertur des optischen Systems zweimal mit ungefähr um 90° gegeneinander verdrehter Zeilenrichtung abgetastet wird und zusätzlich in um etwa 45° verdrehter Stellung eine einzelne, der Drehachse nahe kommende Zeile abgetastet wird.

Für eine gattungsgemäße Anordnung ergibt sie sich mit den kennzeichnenden Merkmalen des Patentanspruchs 2.

Vorteilhafte Weiterbildungen sind Gegenstand der abhängigen Ansprüche 3 und 4.

An die Stelle des ausgeblendeten Teilstrahls der bekannten Methode tritt also eine Quelle für nur ein eng begrenztes paralleles Lichtbündel mit ebener Wellenfront, welches dann zur Abtastung über die Apertur bewegt wird. Ohne weitere Maßnahmen wäre dabei die Quelle für das Lichtbündel ideal frei von jeder Verkippung über die Fläche zu bewegen. Diese Anforderung kann aber durch die erfindungsgemäßen Maßnahmen einer teilweisen Messung der Verkippung und einer Ausmittelung der Restfehler durch mehrfache unterschiedliche Abtastbewegung auf ein konventionell gut beherrschbares Maß reduziert werden.

Im folgenden wird die Erfindung anhand der Zeichnung näher erläutert. Es zeigen:
- Fig. 1: den schematischen Aufbau einer Anordnung zur Prüfung,
- Fig. 2: in den Teilfiguren a), b), c) die einzelnen Abtastvorgänge.

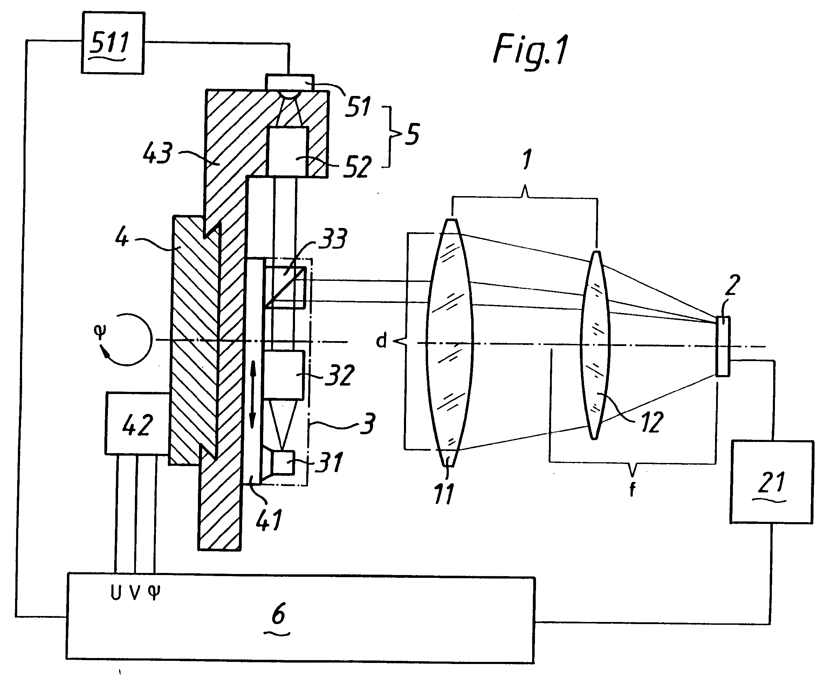

In Fig. 1 besteht ein fokussierendes optisches System 1 mit der Apertur d aus einer Linse 11 und einem Prüfling 12, z.B. einer Linse oder einem Objektiv. Im Abstand der Brennweite f ist ein ortsauflösender Lichtdetektor 2, insbesondere ein hochempfindlicher Lateraldetektor mit einer Ortsauflösung im Nanometerbereich, angeordnet, welcher an eine Betriebsschaltung 21 angeschlossen ist. Die aktive Fläche des Lichtdetektors 2 ist so groß, daß der gesamte Fokus-Lichtfleck des mit Fehlern behafteten optischen Systems 1 von ihm erfaßt wird. Eine Lichtquelle 31, insbesondere eine Laserdiode, ist mit einem hochkorrigierten Kollimator 32 und einem Strahlteiler 33 zu einer Quelle 3 für ein eng begrenztes Bündel parallelen Lichts mit ebener Wellenfront vereinigt und auf einer Positionierplattform 41 angeordnet. Diese Quelle 3 richtet das vom Strahlteiler 33 rechtwinklig abgelenkte parallele Lichtbündel von z.B. 1mm Durchmesser mit einer bis auf ein Prozent der Wellenlänge ebenen Wellenfront auf das optische System 1.

Die Positionierplattform 41 ist auf einer Präzisions-Positioniereinrichtung 4 in zwei orthogonalen Richtungen (u,v) linear bewegbar und um eine dazu senkrechte Achse (φ) drehbar. Eine Einrichtung 42 bewirkt die Positionierbewegungen und die Lagemeldung für alle drei Achsen (u,v,φ). Für die Drehachse sind nur drei, unter jeweils 45° zueinander stehende, definierte Stellungen erforderlich. Derartige Präzisions-Positioniereinrichtungen sind zum Beispiel als automatische Objekttische für Mikroskope und als Elemente von Halbleiterfertigungsstationen bekannt und in vielen Variationen verbreitet. Die Justierung erfolgt so, daß die Linearbewegungsachsen u,v parallel zur Wellenfront der Quelle 3 ausgerichtet sind.

Die Positionierplattform 41 ist in einer ersten Achse (u) verschiebbar auf einer Zwischenplattform 43, welche wiederum in der zweiten Achse (v) orthogonal dazu verschiebbar ist. Auf dieser Zwischenplattform 43 ist ein optischer Kippsensor 5 angeordnet, der den geradlinig durch den Strahlenteiler 33 tretenden Teil des parallelen Lichtbündels aus dem Kollimator 32 über einen zweiten, vorteilhaft baugleichen, Kollimator 52 auf einen ortsauflösenden Lichtdetektor 51 abbildet. Der Lichtdetektor 51 ist vorteilhafterweise baugleich mit dem Lichtdetektor 2. Er ist ebenfalls an eine Betriebsschaltung 511 angeschlossen. Bei der Abtastbewegung der Positionierplattform in u-Richtung auftretende Kippbewegungen um die zwei zur u-Richtung senkrechten Drehachsen können so bis hinunter zu einem Winkelfehler von 10⁻⁹ rad bestimmt werden.

Drehungen um die optische Achse des Kollimators 32 sind wegen der Rotationssymmetrie der Wellenfront ohne Bedeutung. Ein seitlicher Parallelversatz ist ohne Bedeutung, da der Kollimator 32 eine ebene Welle emittiert.

So wird jeweils durch Verschieben der Positionierplattform 41 eine Zeile der Apertur des optischen Systems 1 abgetastet und für eine Anzahl von Positionen der Meßwert des ortsauflösenden Lichtdetektors 2, des Kippsensors 5 und die Positionsmeldung der Präzisions-Positioniereinrichtung 4 einer Steuerungseinrichtung 6 zugeleitet und dort abgespeichert.

Nach Abtastung einer Zeile in u-Richtung der Apertur des optischen Systems 1 bewirkt die Steuerungseinrichtung 6 über die Einrichtung 42 einen Bewegungsschritt der Zwischenplattform 43 in v-Richtung und dann eine weitere Zeilenabtastung in u-Richtung.

Bei jedem Bewegungsschritt in v-Richtung wird die Zwischenplattform 43 einschießlich des Kippsensors 5 verschoben, wobei dieser sowohl verkippt als auch lateral dezentriert werden kann.

Man könnte nun wiederum diese Bewegung überwachen, müßte jedoch alle drei Winkel und zwei Translationen kontrollieren, was bei den erforderlichen Genauigkeiten sehr aufwendig wäre.

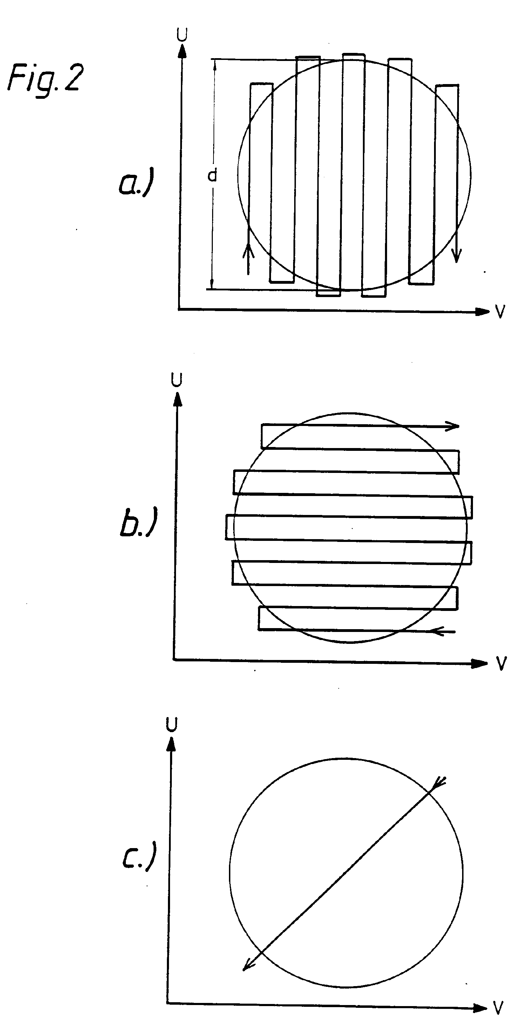

Dieser Aufwand wird vermieden durch die in Fig. 2 a) bis c) schematisch dargestellte Verfahrensweise.

Es wird, gesteuert durch die Steuerungseinrichtung 6, zunächst die ganze Apertur des optischen Systems 1 mit Zeilen in u-Richtung abgetastet und zu jedem Meßpunkt werden alle Daten abgespeichert.

Dabei wird nur die Ortsinformation in der der Zeilenrichtung u entsprechenden x-Koordinate des ortsauflösenden Lichtdetektors 2 ausgenutzt.

Dann werden mit der Präzisions-Positioniereinrichtung 4 die Zwischenplattform 43 und die Positionierplattform 41 um den Winkel φ = 90° gedreht. Nun wird wiederum zeilenweise die ganze Apertur des optischen Systems 1 abgetastet, wobei nun die Zeilenrichtung, für die der Kippsensor 5 wirksam ist, in v-Richtung liegt, wie in Fig. 2b) dargestellt.

Bei dieser zweiten Abtastung wird die nunmehr der Zeilenrichtung v entsprechende y-Koordinate des ortsauflösenden Lichtdetektors 2 ausgenutzt und punktweise mit den Positionsdaten der Positioniereinrichtung 4 und den Daten des Kippsensors 5 abgespeichert.

Zusätzlich wird durch die Steuerungseinrichtung 6 noch eine dritte Abtastung in einer um φ = 45° gegen die ersten beiden verdrehten Position der Positionierplattform 41 durchgeführt, jedoch nur in einer der Drehachse der Positioniereinrichtung 4 nahe liegenden Zeile, wie in Fig. 2c) dargestellt.

Damit lassen sich Ortsfehler, die bei den Bewegungen der Positioniereinrichtung 4 entstehen, rechnerisch eliminieren.

Die Steuerungseinrichtung 6 wird vorteilhaft in Mikroprozessor-Technik realisiert und auch für die Auswertung der Daten ausgenutzt.

Die am Beispiel beschriebene Anordnung und das Verfahren kann zur Prüfung unterschiedlicher optischer Systeme, außer der gezeigten Linse 12 auch von Objektiven oder Spiegeln usw. eingesetzt werden. Bei der Prüfung von Spiegeln ist dann ggf. die optische Achse zu knicken. Auch kann der schiefe Durchgang des parallelen Bündels durch das optische System durch Kippen gegenüber der Positioniereinrichtung untersucht werden. Neben den klassischen Linsenfehlern kann mit der Anordnung insbesondere die Deformation von Wellenfronten untersucht werden.

Auch kann die komplette Kombination aus fokussierendem optischem System 1 und Detektor 2, insbesondere zu Eichzwecken, vermessen werden.

In einem Beispiel ist die Kombination, der dann eine Hadamard-codierte Blende vorzusetzen ist, Teil eines Multiplex-Hartmann-Wellenfrontsensors. Ein solcher Wellenfrontsensor ist Gegenstand der Patentanmeldung "Wellenfrontsensor", derselben Anmelderin vom gleichen Anmeldetag (WO-A-90 12 502).

Dieses System kann mit der beschriebenen Abtastung mit einem kollimierten Lichtstrahl von 0,8mm Durchmesser auf eine Meßgenauigkeit von ca. einem Prozent der Lichtwellenlänge kalibriert werden.

Natürlich ist es genauso möglich, Lichtquelle 31 und Kollimator 32 der Quelle 3 um 90° gegen die in Fig. 1 gezeigte Anordnung zu schwenken und den gerade durch den Strahlteiler 33 tretenden Teilstrahl auf das fokussierende optische System zu lenken.

Der spektrale Verlauf der Eigenschaften der geprüften Komponenten oder Systeme kann bestimmt werden, wenn die Lichtquelle 31 durchgestimmt wird.

## Patentansprüche

1. Verfahren zur Prüfung optischer Komponenten (12) oder Systeme (1), welche in einer Anordnung aus einem fokussierenden optischen System (1) und einem ortsauflösenden Lichtdetektor (2) nahe dessen Brennebene enthalten sind, **dadurch gekennzeichnet,** daß eine einen Kollimator (32) enthaltende Quelle (3) für ein eng begrenztes präzise paralleles Lichtbündel mit ebener Wellenfront in einer Ebene parallel zur Wellenfront zeilenförmig bewegt wird, zu mehreren Positionen der Quelle (3) das Signal des Lichtdetektors (2) bestimmt wird, Kippbewegungen der Quelle (3) senkrecht zur Zeilenrichtung durch eine Anordnung mit einem zweiten Kollimator (52) und ortsempfindlichem Detektor (51) erfaßt werden und die Apertur des optischen Systems (1) zweimal mit um ungefähr 90° gegeneinander verdrehter Zeilenrichtung abgetastet wird und zusätzlich in um etwa 45° verdrehter Stellung eine einzelne, der Drehachse nahe kommende Zeile abgetastet wird.

2. Anordnung zur Prüfung optischer Komponenten (12) oder Systeme (1), welche in einer Anordnung aus einem fokussierenden optischen System (1) und einem ortsauflösenden Lichtdetektor (2) nahe dessen Brennebene enthalten sind, **dadurch gekennzeichnet,** daß
- eine einen Kollimator (32) enthaltende Quelle (3) für ein eng begrenztes Bündel parallelen Lichts mit ebener Wellenfront angeordnet ist auf
- einer Präzisions-Positioniereinrichtung (4) mit zwei zueinander etwa orthogonalen Linearbewegungsachsen (u,v), welche parallel zur Ebene der Wellenfront angeordnet sind, und einer dazu etwa orthogonalen Drehachse (E) und
- eine Kippsensoranordnung (5) vorgesehen ist, mit einem zweiten Kollimator (52) und einem ortsempfindlichen Detektor (51), welche beide an einem Ende einer Führungsbahn für die erste Linearbewegungsachse angeordnet sind, und daß
- eine Steuerungseinrichtung (6) damit verbunden ist, welche bewirkt, daß die Apertur des fokussierenden optischen Systems (1) zeilenweise abgetastet wird, wobei die erste Linearbewegungsachse die Zeilenrichtung darstellt und die Abtastung zweimal mit um ungefähr 90° verdrehter Stellung bezüglich der Drehachse erfolgt und zusätzlich in um etwa 45° verdrehter Stellung eine einzelne, der Drehachse nahekommende Zeile abgetastet wird.

3. Anordnung nach Anspruch 2, **dadurch gekennzeichnet,** daß die Quelle (3) aus einer Lichtquelle (31), einem Kollimator (32) und einem Strahlteiler (33) besteht, wobei der Strahlteiler (33) einen ersten Teilstrahl bildet, der rechtwinklig umgelenkt wird und die ebene Wellenfront der Quelle (3) bildet, die auf das fokussierende optische System (1) gerichtet wird, und einen zweiten Teilstrahl bildet, der geradeaus auf den zweiten Kollimator (52) gerichtet ist.

4. Anordnung nach Anspruch 2, **dadurch gekennzeichnet,** daß die Quelle (3) aus einer Lichtquelle (31), einem Kollimator (32) und einem Strahlteiler (33) besteht, wobei der Strahlteiler (33) einen ersten Teilstrahl bildet, der geradeaus durchläuft und die ebene Wellenfront bildet, die auf das fokussierende optische System (1) gerichtet wird, und einen zweiten Teilstrahl bildet, der rechtwinklig umgelenkt und auf den zweiten Kollimator (52) gerichtet wird.

## Claims

1. Method for the testing of optical components (12) or systems (1), which are contained in an arrangement of a focussing optical system (1) and a position-resolving light detector (2) near the focal plane thereof, characterised thereby, that a source (3), which contains a collimator (32), for a narrowly limited precisely parallel light beam with a planar wave front is moved line by line in a plane parallel to the wave front, the signal of the light detector (2) is ascertained for several positions of the source (3), tilting movements of the source (3) perpendicularly to the line direction are detected by an arrangement with a second collimator (52) and position-sensitive detector (51) and the aperture of the optical system (1) is scanned twice with the line direction relatively rotated through approximately 90° and a single line close to the rotational axis is scanned additionally in a setting rotated through about 45°.

2. Arrangement for the testing of optical components (12) or systems (1), which are contained in an arrangement of a focussing optical system (1) and a position-resolving light detector (2) near the focal plane thereof, characterised thereby, that
- a source (3), which contains a collimator (32), for a narrowly limited precisely parallel light beam with a planar wave front is arranged on
- a precision positioning equipment (4) with two mutually about orthogonal linear movement axes (u, v), which are arranged parallelly to the wave front, and a rotational axis (E) about orthogonal thereto and
- a tilt sensor arrangement (5) is provided, with a second collimator (52) and position-sensitive detector (51), which are both arranged at one end of a guide path for the first linear movement axis, and that
- a control equipment (6) is connected therewith, which has the effect that the aperture of the focussing optical system (1) is scanned line by line, wherein the first linear movement axis represents the line direction and the scanning takes place twice with a setting rotated through approximately 90° relative to the rotational axis and a single line close to the rotational axis is scanned additionally in a setting rotated through about 45°.

3. Arrangement according to claim 2 , characterised thereby, that the source (3) consists of a light source (31), a collimator (32) and a beam splitter (33), wherein the beam splitter (33) forms a first partial beam, which is deflected at a right angle and forms the planar wave front of the source (3), which is directed towards the focussing optical system (1), and a second partial beam which is directed straight ahead towards the second collimator (52).

4. Arrangement according to claim 2, characterised thereby, that the source (3) consists of a light source (31), a collimator (32) and a beam splitter (33), wherein the beam splitter (33) forms a first partial beam, which runs straight ahead and forms the planar wave front, which is directed towards the focussing optical system (1), and a second partial beam which is deflected at a right angle and directed towards the second collimator (52).

## Revendications

1. Procédé de contrôle de composants (12) ou systèmes (1) optiques, qui sont disposés dans un agencement d'un système optique de focalisation (1) et d'un détecteur de lumière (2) effectuant une résolution du lieu, proche du plan de focalisation de celui-ci, caractérisé en ce qu'une source (3) comportant un collimateur (32) pour un faisceau lumineux parallèle précisément délimité, avec un front d'ondes plan, est déplacé le long d'une ligne parallèlement au front d'ondes, que le signal du détecteur de lumière (2) est déterminé, pour plusieurs positions de la source (3) que des mouvements de basculement de la source (3), perpendiculairement à la direction de ligne, captés par un agencement comportant un deuxième collimateur (32) et un détecteur (51) sensible au lieu, et que l'ouverture du système optique (2) est balayé deux fois avec une direction de ligne tournée d'environ 90° l'une par rapport à l'autre, et que, supplémentairement, une ligne individuelle, venant à proximité de l'axe de rotation, est balayée dans une position tournée d'environ 45°.

2. Agencement de contrôle de composants (12) ou systèmes (1) optiques, qui sont disposés dans un agencement formé par un système optique de focalisation (1) et par un détecteur de lumière effectuant une résolution du lieu (2), près du plan de focalisation de celui-ci, caractérisé en ce que
- une source (3) d'un faisceau de lumière parallèle étroitement délimité, comportant un collimateur (32) et ayant un front d'ondes plan est disposé sur
- un dispositif de positionnement précis (4) ayant deux axes de déplacement linéaire (u, v) l'un orthogonal à l'autre, qui sont disposés parallèlement au plan du front d'ondes, et un axe de rotation (E) orthogonal à cela et
- un dispositif capteur à basculement (5) est prévu, comprenant un deuxième collimateur (52) et un détecteur sensible au lieu (51), qui tous les deux sont disposés à une extrémité d'un chemin de guidage pour le premier axe de déplacement linéaire, et que
- une installation de commande (6) est reliée à cela, qui a pour effet que l'ouverture du système optique de focalisation (1) soit balayé ligne par ligne, le premier axe de déplacement linéaire représentant la direction de ligne et le balayage étant effectué deux fois dans des positions tournées d'environ 90° par rapport à l'axe de rotation et une ligne individuelle se trouvant près de l'axe de rotation étant balayée supplémentairement dans une position tournée d'environ 45°.

3. Agencement selon la revendication 2, caractérisé en ce que la source (3) est formée par une source de lumière (31), ou un collimateur (32) et un diviseur de faisceau (33), le diviseur de faisceau (33) produisant un premier faisceau partiel qui est renvoyé de façon perpendiculaire et forme le front d'ondes plan de la source (3), qui est orienté vers le système optique de focalisation (1), et produit un second faisceau partiel qui est orienté tout droit sur un deuxième collimateur (52).

4. Agencement selon la revendication 2, caractérisé en ce que la source (3) est formée par une source de lumière (31), un collimateur (32) et un diviseur de faisceau (33), le diviseur de faisceau (33) produisant un premier faisceau partiel qui traverse tout droit et forme un front d'ondes plan, qui est orienté vers le système optique de focalisation (1), et produit un second faisceau partiel qui est renvoyé de façon perpendiculaire est orienté vers le second collimateur (52).
